# NOUVEAU FASCICULE DE BREVET EUROPEEN

(11) **EP 3 154 787 B2**
(45) Date de publication et mention de la décision concernant l'opposition: **13.04.2022**
(45) Mention de la délivrance du brevet: 03.10.2018
(21) Numéro de dépôt: 15729802.7
(22) Date de dépôt: 12.06.2015
(51) Int. Cl.: B32B 37/04, B32B 38/10, B42D 25/455, B42D 25/324, B42D 25/46, B42D 25/00, B32B 27/08, B32B 27/30, B32B 27/36, B32B 37/10, B32B 37/18, B32B 38/06, B41M 3/14, B41M 5/24, B42D 25/425, B42D 25/328, B42D 25/364, B42D 25/373

(54) **PROCÉDÉ DE FABRICATION D'UN SUPPORT DE DONNÉES MULTICOUCHE À INSCRIPTIONS DE SÉCURITÉ**
VERFAHREN ZUR HERSTELLUNG EINES MEHRSCHICHTIGEN DATENTRÄGERS MIT SICHERHEITSBESCHRIFTUNGEN
METHOD OF MANUFACTURING A MULTILAYER DATA CARRIER HAVING SECURITY INSCRIPTIONS

(30) Priorité: 13.06.2014 FR 1455414
(43) Date de publication de la demande: 19.04.2017
(73) Titulaire: FASVER, 34670 Baillargues (FR)
(72) Inventeur: PHILIPPE, Eric, F-13430 Eyguieres (FR); ALBERNY-SICARD, Didier, F-34000 Montpellier (FR)
(74) Mandataire: HGF
(86) Numéro de dépôt international: PCT/EP2015/063178
(87) Numéro de publication internationale: WO 2015/189392

(56) Documents cités:
- WO-A1-01/62516
- WO-A1-01/68383
- WO-A1-2008/000392
- WO-A1-2012/164011
- WO-A2-2012/019588
- DE-A1-102006 030 865
- DE-A1-102007 013 284
- DE-A1-102009 053 498
- FR-A1- 2 763 889
- FR-A1- 2 768 654
- FR-A1- 2 897 556
- FR-A1- 2 913 126
- GB-A- 2 281 535
- US-A- 3 089 800
- US-A- 5 928 456
- US-A1- 2010 025 477

## Description

L'invention concerne un procédé de fabrication d'un support de données multicouche par lamination à chaud et sous pression d'une pluralité de couches superposées comprenant au moins une couche externe en au moins un matériau thermoplastique, ledit support de données multicouche présentant des inscriptions, dites inscriptions de sécurité. Elle s'étend au support de données multicouche ainsi obtenu, à son utilisation pour la fabrication d'un document officiel, et à un document officiel ainsi obtenu.

Les documents officiels sont des documents qui, en raison de leur nature et/ou des droits qu'ils peuvent conférer, doivent être protégés contre les tentatives de falsification et/ou les contrefaçons et/ou pour garantir une authentification et/ou pour garantir leur intégrité (c'est-à-dire le fait qu'elles n'ont pas été altérées ou modifiées). Il peut s'agir notamment de passeports, visas, cartes d'identité, permis de conduire, cartes grises, cartes de fidélité, cartes bancaires, chèques bancaires, diplômes, certificats, titres de transport, cartes de contrôle d'accès, badges, étiquettes, actes légaux, contrats, registres légaux, plans cadastraux, documents fiduciaires, billets de banque, plans de fabrication ou autres plans... Les documents officiels portent des inscriptions, telles que des mentions variables de personnalisation (nom, prénom, adresse, photo, signature... d'un titulaire ou des parties...) et/ou des mentions communes (motifs sécuritaires, matrices, cadres, noms de champs, sceaux, hologrammes, signatures, valeurs,...).

Dans tout le texte, le terme "visible" qualifie tout rayonnement électromagnétique dont la composition spectrale est située dans le spectre des longueurs d'onde visibles par l'homme, c'est-à-dire dans les longueurs d'onde comprises entre 400 nm et 800 nm. Dans tout le texte, on désigne par "ultraviolets courts" tout rayonnement lumineux de longueur d'onde inférieure à 300 nm -notamment de l'ordre de 250 nm-. Dans tout le texte, on désigne par "ultraviolets longs" tout rayonnement lumineux non visible de longueur d'onde supérieure à 300 nm -en particulier, inférieure à 400 nm, et notamment de l'ordre de 365 nm-.

Dans tout le texte, on désigne par "inscription" tout signe ou motif réalisé sur une couche d'un document, pouvant être lu par l'homme et/ou par machine (OCR), au moins sous certaines conditions (notamment sous éclairage normal en lumière visible ; et/ou sous éclairage spécifique ; et/ou après activation d'un dispositif électronique (écran) ou autre...). Il peut s'agir notamment de mentions variables de personnalisation (nom, état civil, photographie, valeur, dates...) d'un document officiel ou de mentions communes et/ou de sécurité ; de textes (écriture manuelle ou caractères imprimés) ; de codes (ASCII, codes universels à lecture optoélectronique tels que codes à barres...) ; de dessins, d'images ou photographies; de tâches ou aplats... Les documents officiels contiennent en général des inscriptions, dites inscriptions de sécurité, pour empêcher ou rendre très complexes leur reproduction ou leur falsification. Ces inscriptions de sécurité peuvent être du type visibles dans le domaine visible par simple observation à l'oeil nu (sécurité de premier niveau) ; ou du type pouvant être contrôlées à l'aide d'un dispositif spécifique tel qu'une lampe à rayonnement ultraviolet (sécurité de deuxième niveau) ; ou du type pouvant être contrôlées uniquement dans un laboratoire certifié (sécurité de troisième niveau).

Dans tout le texte, une surface est dite brillante lorsqu'elle présente une brillance en lumière blanche à 85 degrés (angle d'incidence de la lumière), par exemple mesurée au brillancemètre BYK GARDNER, supérieure à 50 % ; une surface est dite non brillante lorsqu'elle présente une brillance en lumière blanche à 85 degrés inférieure à 50 % ; une surface est dite mate lorsqu'elle présente une brillance en lumière blanche à 85 degrés inférieure à 30 %. Dans le cas de couches réalisées par impression, notamment par impression sérigraphique ou flexographie, la brillance est liée à l'état de surface. Ainsi, une surface est plus brillante lorsque son état de surface est moins rugueux. La brillance et la matité d'une surface peuvent donc aussi être évaluées par mesures de rugosité.

Dans tout le texte, on désigne par "transfert" toute opération qui consiste à appliquer sur une surface au moins un motif porté par un film et à transférer chaque motif sur la surface par contact du film et de chaque motif sur la surface et adhésion de chaque motif sur la surface, puis séparation du film par rapport à chaque motif et à la surface. Un motif susceptible de faire l'objet d'une telle opération de transfert est désigné motif "transférable".

Dans tout le texte, on désigne par "effet optiquement variable" toute inscription produisant des aspects optiques -notamment mais non exclusivement dans le domaine visible- (par exemple différentes couleurs ou différents tons) qui varient selon les directions d'observation de ce marquage. Il peut s'agir en particulier d'inscriptions réalisées avec des pigments iridescents et/ou interférentiels, ou avec des encres à cristaux liquides ou autres.

Dans tout le texte, "papier" désigne toute feuille obtenue par voie humide à l'aide d'une suspension de fibres de cellulose naturelle et/ou de fibres minérales et/ou de fibres végétales et/ou de fibres synthétiques polymériques autres que la cellulose, pouvant contenir diverses charges et additifs telles qu'utilisée en papeterie. L'expression "papier synthétique" désigne tout papier comprenant des fibres synthétiques polymériques autres que la cellulose.

Dans tout le texte, on désigne par "relief" toute forme s'étendant en saillie ou en creux par rapport à une surface.

Dans tout le texte, on désigne par "vernis" toute composition solide durcie résultant d'une composition liquide durcissable ; ce terme englobe donc les vernis traditionnels durcissant à l'air ou autrement (ultraviolets, polymérisation,...), les encres, les laques, les peinture, les résines... On désigne par "composition de vernis" toute composition liquide durcissable et imprimable permettant d'obtenir un vernis après durcissement. On désigne par "impression" tout procédé d'application d'une composition à l'état liquide durcissable (c'est-à-dire permettant d'obtenir un vernis), notamment une encre liquide, ou d'une encre à sec, sur une face d'un substrat solide.

Dans tout le texte, l'expression "au moins sensiblement" indique, de façon habituelle, qu'une caractéristique, structurelle ou fonctionnelle, ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré. Par ailleurs les expressions "comportant/comprenant un(e)" sont synonymes de "comportant/comprenant au moins un(e)".

De nombreux documents officiels tels que les cartes bancaires, cartes d'identité, permis de conduire, cartes d'accès individuel à des sites ou des transports en commun, feuilles de passeport, fiches douanières, visas, documents fiduciaires, billets de banque... sont formés de supports de données multicouche obtenus par lamination à chaud (température typiquement de l'ordre de 150°C à 200°C) et sous pression (typiquement de l'ordre de 10⁶ Pa à 2.10⁶ Pa) d'une pluralité de couches en matériau thermoplastique -notamment en polycarbonate, matériau présentant par ailleurs de nombreux avantages dans ces applications (rigidité, durabilité, facilité et fiabilité des marquages (inscriptions variables, motifs de sécurité...), possibilité d'effectuer des marquages par rayonnement laser...)-.

Du point de vue industriel, il est important de pouvoir fabriquer ces supports de données en grandes séries, en incorporant dans ces derniers toutes les inscriptions de sécurité lors de la lamination à chaud et sous pression et en évitant de multiples étapes successives et l'utilisation d'outillages complexes et coûteux. Or, les possibilités offertes en ce qui concerne les inscriptions de sécurité avec les supports de données fabriqués par lamination à chaud et sous pression sont limitées par plusieurs contraintes :
- lorsque les inscriptions de sécurité sont réalisées avant la lamination à chaud et sous pression, elles doivent elles-mêmes être résistantes à ladite lamination à chaud et sous pression et ne pas affecter son résultat ;
- il est possible de réaliser certaines inscriptions de sécurité au cours de la lamination à chaud et sous pression, en utilisant des plaques de matriçage et/ou embossage appropriées ; mais outre que cela n'est possible que pour certains types d'inscriptions de sécurité, cette option nécessite la fabrication extrêmement coûteuse de plaques spécifiques pour chaque série d'inscriptions de sécurité à réaliser ; de plus les motifs pouvant être réalisés sont relativement grossiers, et donc facilement reproductibles par des contrefacteurs.

En particulier, des inscriptions de sécurité telles que des motifs en relief présentant des brillances différentes ; des motifs holographiques ; des motifs de vernis métallisé ; ou des motifs photoluminescents sous éclairage par un rayonnement lumineux hors du domaine visible, ne peuvent pas aujourd'hui être intégrés aux supports de données multicouche en matériau thermoplastique par lamination à chaud et sous pression dans des conditions économiques compatibles avec une exploitation à l'échelle industrielle.

Plus particulièrement, on ne sait pas incorporer des motifs invisibles sous éclairage en lumière visible photoluminescents sous éclairage par des ultraviolets courts à des supports de données multicouche en matériau thermoplastique par lamination à chaud et sous pression. En effet, les matériaux thermoplastiques constitutifs des supports de données multicouche tels que le polycarbonate ou le PVC ne sont pas transparents aux ultraviolets courts, et la simple impression, par exemple en sérigraphie, de tels motifs photoluminescents en surface d'un support de données multicouche ne procure pas une résistance suffisante aux agressions mécaniques (les motifs pouvant être facilement supprimés par simple abrasion). De même, on ne sait pas appliquer par impression d'une encre en surface d'un support de données multicouche des motifs métallisés réfléchissants suffisamment résistants aux agressions mécaniques.

Le document FR 2 913 126 A1, divulgue un procédé de fabrication d'un support de données multi-couche par lamination à chaud et sous pression d'une pluralité de couches superposées. Dans ce contexte, l'invention vise donc de façon générale à proposer un procédé de fabrication permettant d'incorporer diverses inscriptions de sécurité dans un support de données multicouche en matériau thermoplastique laminé à chaud et sous pression, y compris des motifs en relief présentant des brillances différentes ; des motifs holographiques ; des motifs de vernis métallisé et/ou à effet réfléchissant (miroir) ; des motifs photoluminescents sous éclairage par un rayonnement lumineux hors du domaine visible -notamment des motifs photoluminescents sous éclairage par des ultraviolets courts-, et ce dans des conditions économiques compatibles avec une exploitation à l'échelle industrielle.

L'invention vise également à proposer un tel procédé de fabrication qui soit compatible avec les procédés de lamination à chaud et sous pression de tels supports de données, qui ne nécessite pas la fabrication d'outillages complexes spécifiques et n'impose pas de nombreuses étapes supplémentaires de traitement préalable ou postérieur à la lamination à chaud et sous pression des différentes couches constitutives des supports de données.

Pour ce faire, l'invention concerne un procédé de fabrication tel que décrit dans la revendication 1.

Alors qu'un procédé de lamination à chaud et sous pression d'une pluralité de couches dont au moins une partie est formée d'au moins un matériau thermoplastique est considéré comme entraînant nécessairement une parfaite fusion des différentes couches thermoplastiques entre elles, ce qui constitue son principal avantage, les inventeurs ont déterminé avec surprise qu'il est possible de prévoir un film de marquage pouvant être superposé à une telle couche thermoplastique et faire l'objet d'une lamination de marquage avec au moins cette couche thermoplastique, puis d'une séparation de cette couche thermoplastique, pour permettre de réaliser un marquage sur cette couche, marquage qui permet l'incorporation de diverses inscriptions de sécurité dans un support de données multicouche laminé à chaud et sous pression.

Encore plus surprenant, les inventeurs ont déterminé qu'il est possible d'incorporer un tel film de marquage séparable en tant que couche extrême de l'empilement de ladite pluralité de couches thermoplastiques superposées auquel la lamination à chaud et sous pression est appliquée pour fabriquer le support de données multicouche. Ainsi, un procédé selon une variante de l'invention est aussi avantageusement caractérisé en ce que la couche à marquer est une couche extrême de ladite pluralité de couches superposées, destinée à former une face extrême libre du support de données multicouche, et en ce que ladite lamination de marquage est ladite lamination à chaud et sous pression de ladite pluralité de couches superposées, le film de marquage étant placé au contact de la couche à marquer pendant cette lamination à chaud et sous pression, ladite face extrême libre du support portant lesdites inscriptions de sécurité après ladite lamination à chaud et sous pression.

Bien entendu, rien n'empêche d'utiliser plusieurs films de marquage pour fabriquer un seul et même support de données multicouche, par exemple un film de marquage pour marquer chaque couche extrême formant les faces libres du support de données multicouche et/ou un film de marquage pour incorporer des inscriptions de sécurité sur une couche à marquer placée au sein de l'épaisseur du support de données multicouche. Dans cette dernière variante, la lamination de marquage doit cependant être réalisée avant ladite lamination à chaud et sous pression de ladite pluralité de couches superposées permettant d'obtenir le support de données multicouche, la couche à marquer ayant subi la lamination de marquage, et portant donc des inscriptions de sécurité, étant incorporée ensuite dans l'empilement utilisé pour réaliser ladite lamination à chaud et sous pression des différentes couches superposées constituant le support de données multicouche.

Ainsi, dans une variante de l'invention, qui peut être combinée à la précédente, une lamination de marquage est réalisée avant ladite lamination à chaud et sous pression de ladite pluralité de couches superposées, la couche à marquer étant marquée avec lesdites inscriptions de sécurité et intégrée à ladite pluralité de couches superposées avant de réaliser ladite lamination à chaud et sous pression de ladite pluralité de couches superposées.

Le film de marquage peut faire l'objet de très nombreuses variantes de réalisation, des lors que les critères mentionnés ci-dessus sont satisfaits, à savoir d'une part qu'il résiste à la lamination de marquage de la couche à marquer, d'autre part qu'il puisse porter des inscriptions en vitrophanie permettant d'incorporer des inscriptions sur ladite couche à marquer, et qu'il puisse ensuite être séparé de cette couche à marquer après la lamination de marquage. Ce film de marquage est choisi dans un matériau approprié en fonction de celui constituant la couche à marquer. En outre, il est également choisi de façon à permettre la réalisation des inscriptions en vitrophanie sur le film de marquage de façon simple et économique, par exemple par impression d'au moins une couche de vernis et/ou d'encre, notamment par impression sérigraphique ou flexographique, ou autre.

Conformément à l'invention, on utilise un tel film de marquage pour réaliser des motifs en relief (empreintes) à titre d'inscriptions de sécurité. Ainsi, selon l'invention, on choisit un film de marquage présentant, à titre d'inscriptions en vitrophanie, des motifs en relief en vitrophanie correspondant à des inscriptions de sécurité formées de motifs en relief.

Un tel film de marquage présentant des motifs en relief en vitrophanie d'embossage peut être réalisé de différentes manières, notamment par gravure laser, embossage, impression d'une composition de vernis... Avantageusement et selon l'invention, on choisit un film de marquage présentant une face, dite face de contact, portant lesdits motifs en relief en vitrophanie formés par impression d'un vernis sur la face de contact, ladite face de contact et ledit vernis étant choisis pour que lesdits motifs en relief en vitrophanie restent solidaire du film de marquage après lamination de marquage et séparation du film de marquage et de ladite couche à marquer. On choisit ainsi la matière constitutive du film de marquage et celle de la composition de vernis utilisée pour réaliser des motifs en relief en vitrophanie d'embossage de telle sorte que ces motifs en relief en vitrophanie d'embossage restent solidaires du film de marquage. En particulier, avantageusement et selon l'invention, on réalise ladite impression de vernis avec une composition de vernis à séchage sous ultraviolets comprenant au moins un agent promoteur d'adhérence du vernis sur ladite face de contact.

Par ailleurs, avantageusement et selon l'invention, les motifs en relief en vitrophanie sont choisis parmi des motifs en reliefs imprimés sur la face de contact avec ledit vernis, et des motifs en relief embossés en surface d'une couche dudit vernis imprimée sur la face de contact.

Un film de marquage avec de tels motifs en relief en vitrophanie d'embossage est un film de matriçage (ou d'estampage) qui peut être utilisé pour réaliser différents types d'inscriptions de sécurité, et en particulier des inscriptions présentant des brillances différentes (permettant d'empêcher la reproduction par lecture optique) par exemple avec des motifs en relief formés d'un vernis brillant imprimé sur la face de contact mate d'un film de marquage, ou avec des motifs en relief formés d'un vernis mat imprimé sur la face de contact brillante d'un film de marquage, ou un vernis brillant imprimé en aplat sur la face de contact du film de marquage et dans lequel sont embossées des empreintes mates, ou un vernis mat imprimé en aplat sur la face de contact du film de marquage et dans lequel sont embossées des empreintes brillantes... Ainsi, avantageusement et selon l'invention, les motifs en relief en vitrophanie sont choisis parmi des motifs en relief présentant au moins deux états de surface différents correspondant respectivement à au moins deux valeurs différentes de brillance desdites inscriptions de sécurité, et des motifs en vitrophanie en relief adaptés pour former au moins un motif holographique.

Un film de marquage avec de tels motifs en relief en vitrophanie peut aussi être utilisé pour former au moins un motif holographique. Ainsi, avantageusement et selon l'invention, on choisit un film de marquage présentant, à titre d'inscriptions en vitrophanie, au moins une impression de vernis adaptée pour être transférée par ladite lamination de marquage sur ladite couche à marquer, lesdites inscriptions en vitrophanie transférées constituant lesdites inscriptions de sécurité.

Ainsi, avec un tel film de marquage séparable doté de motifs en relief en vitrophanie il s'avère en particulier possible en une seule et même étape d'une part de réaliser la lamination à chaud et sous pression des différentes couches constitutives du support de données multicouche, d'autre part de former des inscriptions de sécurité constituées de motifs en relief et/ou présentant des brillances différentes et/ou holographiques sur l'une au moins des faces extrêmes libres de ce support de données multicouche.

Dans ces variantes, avantageusement et selon l'invention, ledit film de marquage peut être formé d'un film de polyester revêtu d'une couche adaptée pour pouvoir être embossée (par exemple par laminage à travers un ou plusieurs cylindre(s) d'estampage holographique ou non holographique) pour former des motifs en relief holographiques ou non holographiques, cette couche étant constitutive du film de marquage (c'est-à-dire associée au film de polyester à la fabrication en continu), ou appliquée par impression en aplat sur un tel film de polyester. En particulier, on peut utiliser directement, à titre de film de marquage, un film susceptible d'être estampé préalablement fabriqué, par exemple un film tel que commercialisé sous la référence "UV cast" par la société ITW Covid Security Group Inc. (Cranbury, USA). Il s'avère en particulier que de tels films de polyester ou "UV cast" remplissent les critères mentionnés ci-dessus en ce qui concerne le film de marquage. Ils sont particulièrement avantageux lorsque la couche à marquer est une couche de polycarbonate ou de PVC.

Ainsi, avantageusement et selon l'invention, chaque couche de ladite pluralité de couches superposées est formée d'au moins un matériau thermoplastique choisi dans le groupe des polycarbonates, des PVC, des papiers synthétiques, leurs mélanges et leurs associations, et on choisit un film de marquage en polyester. Bien entendu, d'autres variantes sont possibles.

Par ailleurs, dans certains modes de réalisation de l'invention, on utilise un film de marquage pour réaliser des inscriptions de sécurité par transfert desdits inscriptions en vitrophanie sur la couche à marquer au cours de ladite lamination de marquage, notamment au cours de ladite lamination à chaud et sous pression de ladite pluralité de couches superposées permettant de fabriquer le support de données multicouche. Ainsi, avantageusement et selon l'invention, on choisit un film de marquage présentant, à titre d'inscriptions en vitrophanie, au moins une impression de vernis adaptée pour être transférée par ladite lamination de marquage sur ladite couche à marquer, lesdites inscriptions en vitrophanie transférées constituant lesdites inscriptions de sécurité.

Il s'avère en effet de façon totalement surprenante d'une part qu'il est possible de transférer des inscriptions portées initialement par un film de marquage sur ladite couche à marquer, c'est-à-dire sur une couche de ladite pluralité de couches superposées, et ce soit au cours d'une étape préalable de lamination de marquage d'au moins une couche à marquer, soit au cours même de ladite lamination à chaud et sous pression de cette pluralité de couches, d'autre part que ces inscriptions ainsi transférées sont d'excellente qualité et présentent une grande résistance aux agressions mécaniques, notamment à l'abrasion, le vernis transféré s'incorporant sur une certaine profondeur dans l'épaisseur de la couche à marquer.

Ainsi, on peut en particulier réaliser en une seule et même étape, non seulement la lamination à chaud et sous pression des différentes couches constitutives du support de données multicouche, mais également par un simple procédé de transfert, des inscriptions de sécurité sur l'une au moins des faces extrêmes libres de ce support de données multicouche.

De façon surprenante, les inventeurs ont constaté que cette variante d'un procédé selon l'invention en une seule étape permet en particulier de former sur un support de données multicouche des inscriptions de sécurité photoluminescentes sous éclairage par des ultraviolets courts qui sont résistantes à l'abrasion.

Plus généralement, les inscriptions de sécurité ainsi formées avec un tel film de marquage peuvent notamment être choisies dans le groupe constitué des motifs photoluminescents, des motifs fluorescents, des motifs photochromiques, des motifs thermochromiques, des motifs à effet optiquement variable (iridescents, interférentiels, ou autres), des motifs à colorant soluble, des motifs à liant soluble, des motifs holographiques et des motifs métallisés et/ou réfléchissants (c'est-à-dire formés d'au moins une impression d'une encre produisant un effet métallique et/ou réfléchissant et/ou incorporant des particules métalliques et/ou une couche métallique, colorés ou non).

En particulier des inscriptions de sécurité ainsi formées par transfert peuvent notamment être des inscriptions photoluminescentes sous éclairage par un rayonnement lumineux hors du domaine visible -notamment des inscriptions photoluminescentes sous éclairage par des ultraviolets, en particulier des ultraviolets courts-. De telles inscriptions photoluminescentes peuvent être avantageusement au moins sensiblement invisibles sous éclairage dans le domaine visible.

Ainsi, avantageusement et selon l'invention, au moins une impression de vernis est choisie parmi une impression d'un vernis métallisé et une impression d'un vernis photoluminescent sous éclairage par un rayonnement lumineux hors du domaine visible -notamment sous ultraviolets, en particulier sous ultraviolets courts-.

Également, des inscriptions de sécurité ainsi formées par transfert peuvent notamment être des inscriptions métallisées réfléchissantes qui présentent également la particularité surprenante d'un excellent transfert sur la couche à marquer.

Ainsi, avantageusement et selon l'invention, au moins une impression de vernis est réalisée avec une composition d'encre métallisée réfléchissante.

Il est à noter que les différentes variantes de l'invention peuvent être combinées. En particulier, il est possible d'utiliser un même film de marquage comprenant des motifs en relief en vitrophanie d'embossage et des inscriptions de vernis transférables, ce film de marquage constituant à la fois un film de matriçage et un film de transfert.

L'invention s'étend à un support de données multicouche présentant des inscriptions, dites inscriptions de sécurité, formé d'une pluralité de couches superposées laminées entre elles comprenant au moins une couche externe en au moins un matériau thermoplastique, caractérisé en ce qu'il a été fabriqué par un procédé selon l'invention. En particulier, l'invention concerne un support de données multicouche pour un document officiel, obtenu par un procédé selon l'invention, présentant des inscriptions, dites inscriptions de sécurité, formé d'une pluralité de couches superposées et laminées entre elles, comprenant au moins une couche en au moins un matériau thermoplastique, caractérisé en ce qu'il comprend des inscriptions de sécurité choisies parmi des motifs en relief présentant des brillances différentes ; des motifs holographiques ; des motifs métallisés et/ou réfléchissants ; et des motifs photoluminescents sous éclairage par un rayonnement lumineux hors du domaine visible -notamment sous ultraviolets, en particulier sous ultraviolets courts-. En particulier, l'invention concerne un support de données multicouche en matériau thermoplastique. En particulier, l'invention concerne un support de données multicouche dans lequel chaque couche de ladite pluralité de couches superposées est formée d'au moins un matériau thermoplastique choisi dans le groupe des polycarbonates.

Avantageusement et selon l'invention, chaque couche de ladite pluralité de couches superposées est formée d'au moins un matériau thermoplastique choisi dans le groupe des polycarbonates, des PVC, des papiers synthétiques, leurs mélanges et leurs associations (couvertures de passeports par exemple).

En outre, avantageusement un support de données selon certains modes de réalisation de l'invention présente des inscriptions de sécurité formées sur au moins l'une de ses faces externes libres.

L'invention s'étend également à un document officiel comprenant au moins un support de données multicouche selon l'invention. Un document officiel selon l'invention peut notamment être choisi dans le groupe formé des passeports, des feuilles de passeport, des fiches douanières, des visas, des cartes d'identité, des permis de conduire, des cartes d'immatriculation de véhicules (cartes grises), des cartes bancaires, des cartes de fidélité, des chèques bancaires, des diplômes, des certificats, des titres de transport, des cartes de contrôle d'accès, des badges, des étiquettes, des actes légaux, des contrats, des registres légaux, des plans cadastraux, des documents fiduciaires, des billets de banque, des emballages et des plans de fabrication.

L'invention concerne également un procédé de fabrication, un support de données multicouche et un document officiel caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est un schéma illustrant en coupe une étape de lamination à chaud et sous pression d'un empilement de couches dans un procédé selon l'invention,
- la figure 2 est un schéma illustrant en coupe une étape de séparation du film de marquage d'un procédé selon une variante de l'invention,
- la figure 3 est un schéma en plan illustrant un exemple de support de données selon l'invention doté d'inscriptions de sécurité présentant des brillances différentes,
- la figure 4 est un schéma illustrant une variante de fabrication d'un film de marquage pouvant être utilisé dans un procédé selon l'invention,
- la figure 5 est un schéma en coupe illustrant un exemple de support de données selon l'invention doté d'inscriptions de sécurité holographiques,
- la figure 6 est un schéma illustrant en coupe une étape de séparation du film de marquage d'un procédé qui ne fait pas partie de l'invention.

Sur les figures, les échelles et les dimensions relatives ne sont pas respectées, à des fins d'illustration. En particulier, les épaisseurs sont exagérément agrandies.

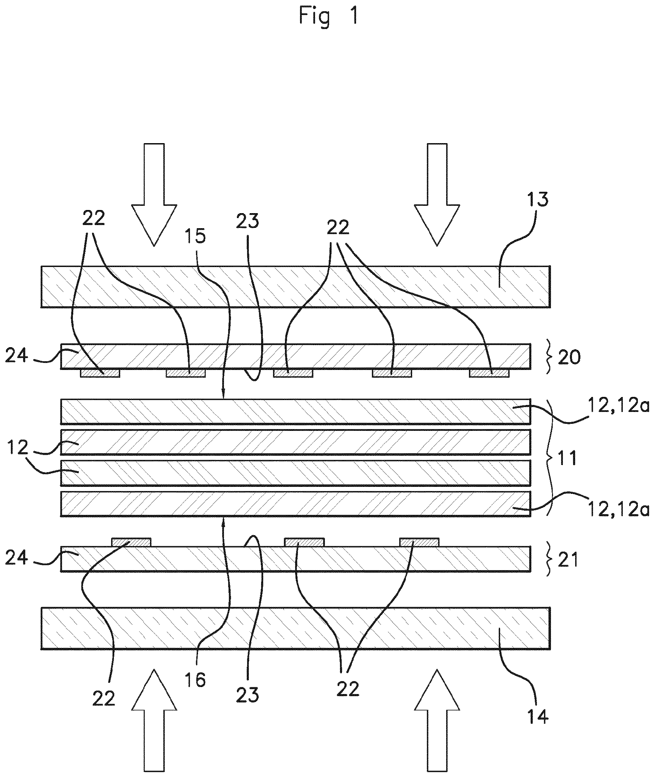

La figure 1 représente un exemple de lamination à chaud et sous pression d'un empilement 11 formé d'une pluralité de couches 12 superposées en matériau thermoplastique, par exemple en polycarbonate ou en PVC, au nombre de quatre dans l'exemple. L'empilement 11 des couches 12 superposées présente deux faces extrêmes 15, 16 formées par les dernières couches de l'empilement 11, et qui sont destinées à former, après lamination à chaud et sous pression, les deux faces libres externes 17, 18 du support 19 de données multicouche obtenu.

Dans le mode de réalisation de la figure 1, le procédé selon l'invention permet de réaliser des inscriptions de sécurité sur ces faces libres externes 17, 18 du support 19 de données multicouche. Pour ce faire, un film de marquage 20, 21 est appliqué respectivement sur chacune des deux faces extrêmes 15, 16 des dernières couches, dites couches 12a à marquer, de l'empilement 11.

Chaque film de marquage 20, 21 comprend un film 24 de polyester présentant une face, dite face 23 de contact, sur laquelle des motifs 22 en relief (en saillie) d'embossage sont imprimés à l'aide d'une composition de vernis choisie pour pouvoir adhérer sur la face 23 de contact du film de polyester (y compris lors de la séparation ultérieure du film de marquage 20, 21), être compatible avec les conditions de la lamination à chaud et sous pression de l'empilement 11 ultérieurement mise en oeuvre, et permettre le marquage par embossage des faces extrêmes 15, 16 des couches 12a à marquer de l'empilement 11. Avantageusement, on utilise une composition de vernis acrylique à séchage sous ultraviolets incorporant 1 % à 10 %, notamment de 4 à 6 % d'un agent promoteur d'adhérence, par exemple tel que commercialisé sous la référence UV290 par la société VFP (Saint Christol les Alès, France).

Ce marquage par embossage produit donc des inscriptions de sécurité qui sont formées de motifs 25 en relief (en creux) sur les faces 17, 18 libres extrêmes du support 19 de données multicouche. Les motifs 22 en relief d'embossage du film de marquage 20, 21 sont des motifs en vitrophanie (symétriques vus dans un miroir) et en négatif par rapport aux motifs 25 en relief constituant des inscriptions de sécurité sur le support 19 de données multicouche.

Par exemple, on utilise un film 24 de polyester dont l'épaisseur est comprise entre 36 µm et 500 µm, et on réalise les motifs 22 en relief d'embossage avec une composition de vernis à séchage sous ultraviolets imprimée avec une épaisseur comprise entre 5 µm et 50 µm. Les films de marquage 20, 21 sont donc, dans ce mode de réalisation, des films de matriçage formant des empreintes par embossage dans les faces extrêmes 15, 16 des couches 12a à marquer lors de la lamination à chaud et sous pression.

Ces motifs 22 en relief d'embossage sont discontinus c'est-à-dire ne couvrent pas l'intégralité de la face 23 de contact du film de polyester. Il permet en particulier de produire des motifs 25 en relief présentant des états de brillances différents. Par exemple, on utilise un film 24 de polyester dont la face 23 de contact et mat, et une composition de vernis brillant permettant d'imprimer des motifs 22 en relief d'embossage brillants sur cette face 23 de contact.

Dans le procédé de lamination à chaud et sous pression, l'empilement 11 revêtu de chaque film de marquage 20, 21 est placé entre les plateaux 13, 14 d'une presse chauffante de lamination, et soumis à une ou plusieurs étape(s) de compression à haute température, par exemple dans les conditions suivantes :
- une durée initiale de 1 minute à 5 minutes de montée à une température comprise entre 150° C et 200° C ;
- une première étape de compression à la température ainsi atteinte pendant une durée comprise entre 5 minutes et 30 minutes sous une première valeur de pression, par exemple comprise entre 20 N/cm² et 50 N/cm² ;
- une deuxième étape de compression à la même température pendant une durée comprise entre 1 minute et 30 minutes sous une deuxième valeur de pression, par exemple comprise entre 100 N/cm² et 200 N/cm² ;
- une étape de refroidissement à température ambiante sous une troisième valeur de pression, de préférence supérieure à la deuxième valeur de pression, par exemple comprise entre 150 N/cm² et 200 N/cm².

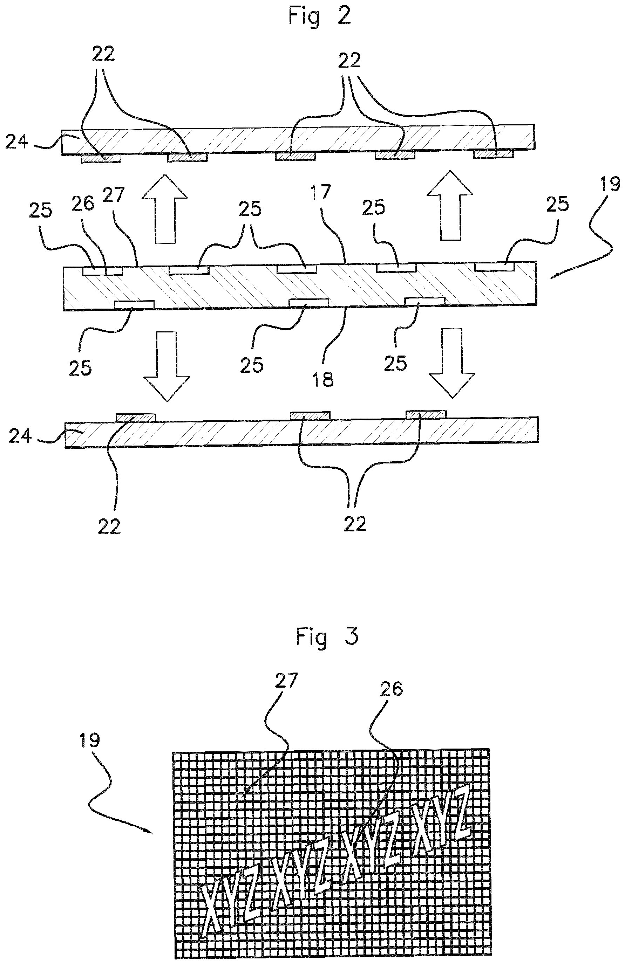

Après cette lamination à chaud et sous pression des différentes couches 12 constitutives du support de données multicouche avec les deux films de marquage 20, 21, les deux films de marquage 20, 21 peuvent être séparés, notamment par simple pelage manuel, des faces 15, 16 des couches 12 à marquer comme représenté figure 2. Les motifs 22 en relief d'embossage de chaque film de marquage 20, 21 restent solidaires de ce dernier.

Les motifs 25 en relief ainsi formés sur les faces 17, 18 libres du support 19 de données multicouche sont des portions creuses qui correspondent aux portions en surépaisseur des motifs 22 en relief d'embossage des films de marquage 20, 21. Ces portions creuses présentent un fond 26 ayant le même état de surface, et donc le même état de brillance que ces portions en surépaisseur, c'est-à-dire que le vernis utilisé pour imprimer les motifs 22 en relief d'embossage. Les autres parties 27 des faces 17, 18 libres externes présentent un état de surface correspondant à celui de la face 23 de contact du film de marquage 20, 21. Ainsi, lorsque l'on utilise un vernis brillant imprimé sur une face 23 de contact mate, le fond 26 des portions creuses est brillant tandis que les autres parties 27 sont mates. Si à l'inverse on utilise un vernis mat imprimé sur une face 23 de contact brillante, le fond 26 des portions creuses sera mat tandis que les autres parties 27 seront brillantes.

Ce mode de réalisation permet en particulier d'obtenir des inscriptions de sécurité présentant un fort contraste entre les portions brillantes et les portions mates, qui peuvent être très fines et complexes, et ce de façon économique, simple, rapide. En outre, ces inscriptions de sécurité formée de motifs 25 en relief procurent un effet tactile en surface au support 19 de données multicouche.

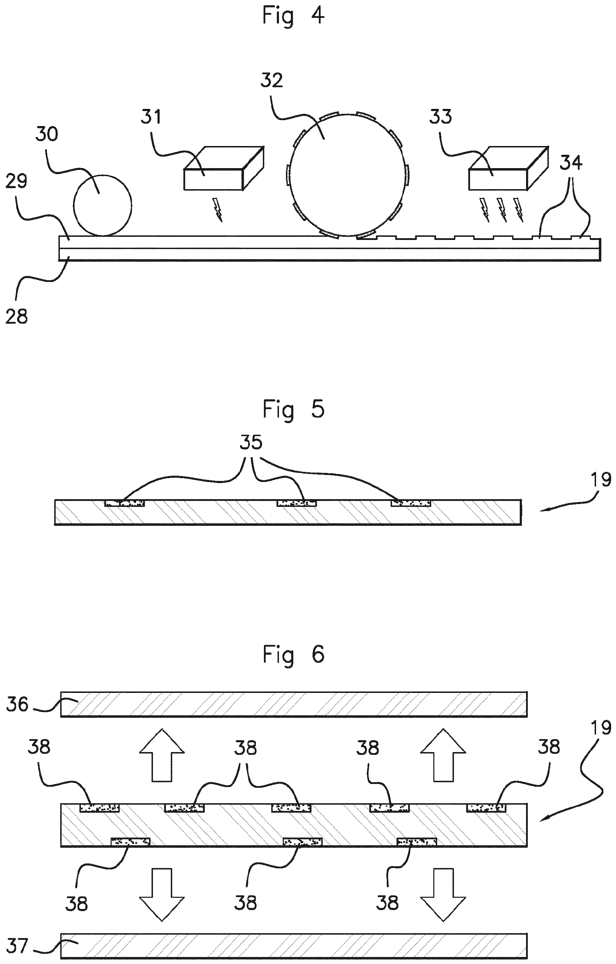

Dans la variante représentée figure 4, les films de marquage 20, 21 présentant des motifs 34 en relief (en saillie) d'embossage sont réalisés non pas par impression de ces motifs d'embossage directement sur une face de contact d'un film de polyester, mais par embossage d'une couche de vernis. Pour ce faire, on imprime (poste d'impression 30) en aplat en continu une couche 29 de vernis à séchage sous ultraviolets sur un film 28 de polyester. Cette impression en aplat est partiellement durcie en passant en regard d'un poste 31 de séchage sous ultraviolets de faible énergie. Le film est ensuite embossé par un cylindre 32 d'embossage produisant des empreintes dans l'épaisseur de la couche 29 de vernis formant ainsi les motifs 34 en relief d'embossage. Le vernis est ensuite définitivement durci en passant sous un deuxième poste 33 de séchage sous ultraviolets de forte énergie.

Un exemple d'un vernis pouvant être utilisé pour réaliser la couche 29 de vernis estampable est un mélange composé de 10 % d'un acrylate de poly éther siliconé et de 90 % d'une encre à séchage sous ultraviolets. Le film de polyester peut être un film tel que commercialisé sous la référence "UV cast" par la société ITW Covid Security Group Inc. (Cranbury, USA).

Un film de marquage ainsi réalisé peut être utilisé exactement de la même façon que dans la variante précédente. Les motifs 34 en relief en vitrophanie d'embossage peuvent cependant être réalisés avec une finesse encore plus grande, par exemple avec une largeur et une épaisseur comprise entre 10 µm et 30 µm, notamment de l'ordre de 20 µm. En particulier, les motifs 34 en relief d'embossage peuvent constituer des motifs holographiques en vitrophanie. De tels motifs 34 en relief en vitrophanie holographiques produisent, après la lamination à chaud et sous pression, des motifs 35 en relief holographiques (estampage en creux) sur les faces 17, 18 du support 19 de données multicouche, comme représenté figure 5.

Dans la variante représentée figure 6, qui ne fait pas partie de l'invention, on utilise des films de marquage 36, 37 qui ne sont pas des films de matriçage, mais au contraire des films de transfert, c'est-à-dire portant des inscriptions imprimées en vitrophanie à l'aide d'une composition de vernis choisie de telle sorte qu'elle transfert sur la couche 12a à marquer de l'empilement 11 lors de l'opération de lamination à chaud et sous pression de cet empilement 11 revêtu des deux films de marquage 36, 37. La figure 6 représente uniquement l'étape de séparation par pelage des films de marquage 36, 37. Comme on le voit, les inscriptions 38 initialement portées par les films de marquage 36, 37 se séparent de ces film de marquage 36, 37 lors de leur pelage, restent solidaires des couches 12a à marquer, et sont donc transférées sur les faces libres 17, 18 du support 19 de données multicouche.

On peut ainsi former des inscriptions 38 de sécurité de natures très diverses, notamment des inscriptions photoluminescentes sous éclairage par un rayonnement lumineux hors du domaine visible et invisibles sous éclairage dans le domaine visible. Plus particulièrement, on peut former sur le support 19 de données multicouche thermoplastique des inscriptions photoluminescentes sous éclairage par des ultraviolets courts.

### EXEMPLE 1 :

Sur un film polyester mat de 75µm d'épaisseur traité pour favoriser l'adhérence commercialisé sous la référence STABIPHANE^{®} MTDE par la société NORMANDY COATING, (Arques la bataille, France; http://www.normandy-coating.com/fr/Les-produits/mates.html), on imprime en sérigraphie (maille 120) des lettres comme représenté figure 3 avec une composition de vernis à durcissement sous ultraviolets commercialisée sous la référence UV 391 série Uvibond^{®} par la société SERICOL (Trappes, France), mélangée à 5 % d'un promoteur d'adhérence commercialisé sous la référence UV290 par la société VFP (Saint Christol les Alès, France).

On applique un tel film de marquage sur chacune des deux faces d'un empilement de feuilles de polycarbonate comment représenté figure 1, à savoir : une feuille de 50 µm de polycarbonate transparent ; une feuille de 100 µm de polycarbonate transparent ; une feuille de 400 µm de polycarbonate blanc ; une feuille de 100 µm de polycarbonate transparent ; une feuille de 50 µm de polycarbonate transparent.

L'ensemble des feuilles formant cet empilement est laminé dans une presse de lamination dans les conditions suivantes :
- 1 min de montée à 180°C
- 12 min à 180°C sous 35 N/cm²
- 5 min à 180°C sous 140 N/cm²
- refroidissement à 20°C pendant 17 min sous 140 N/cm².

On peut ensuite séparer par pelage manuel les deux films de marquage. Les lettres imprimées avec le vernis à séchage sous ultraviolets sur le film de polyester restent solidaires de ce dernier. On obtient un support de données sous forme d'une carte dont l'épaisseur totale est égale à la somme des épaisseurs des feuilles de polycarbonate utilisées diminuée d'environ 10 %. Ce support de données présente sur ses faces externes des motifs contrastés mats et brillants, les motifs brillants étant en creux correspondant aux lettres, comme représenté figure 3.

### EXEMPLE 2 :

On réalise un motif holographique par embossage, avec un cylindre holographique, d'un film tel que commercialisé sous la référence "UV cast" par la société ITW Covid Security Group Inc. (Cranbury, USA).

On applique un tel film de marquage sur chacune des deux faces d'un empilement de feuilles de polycarbonate, et l'ensemble des feuilles formant cet empilement est laminé dans une presse de lamination à chaud et sous pression comme décrit dans l'exemple 1.

On peut ensuite séparer par pelage manuel les deux films de marquage. On obtient un support de données sous forme d'une carte dont l'épaisseur totale est égale à la somme des épaisseurs des feuilles de polycarbonate utilisées diminuée d'environ 10 %. Ce support de données présente sur ses faces externes des motifs holographiques, comme représenté figure 5.

### EXEMPLE 3 (ne fait pas partie de l'invention) :

Sur un film polyester brillant de 100µm d'épaisseur commercialisé sous la référence HA1000710X10 (MC) par la société TECNIFILM (Valence, France ; www.technifilm.com) on imprime en sérigraphie (maille 120) des lettres avec une composition d'encre commercialisée sous la référence Ovtek^{®} Lg110606 Stellar par la société Tiflex (Poncin, France), et ce en plusieurs couleurs : bleu/jaune, jaune/bleu, vert/rouge et rouge/vert.

On applique un tel film de marquage sur chacune des deux faces d'un empilement de feuilles de polycarbonate, et l'ensemble des feuilles formant cet empilement est laminé dans une presse de lamination à chaud et sous pression comme décrit dans l'exemple 1.

On peut ensuite séparer par pelage manuel les deux films de marquage. On obtient un support de données sous forme d'une carte dont l'épaisseur totale est égale à la somme des épaisseurs des feuilles de polycarbonate utilisées diminuée d'environ 10 %. Ce support de données présente sur ses faces externes des motifs colorés iridescents correspondant à ceux imprimés sur le film de polyester en vitrophanie, qui ont été transférés sur la face externe du support de données au cours de la lamination à chaud et sous pression comme représenté figure 6. On constate qu'un simple grattage de surface ne permet pas de supprimer complètement ces motifs, l'encre ayant pénétré dans l'épaisseur du polycarbonate.

### EXEMPLE 4 (ne fait pas partie de l'invention) :

Sur un film polyester transparent mat de 100 µm d'épaisseur commercialisé sous la référence Arcophane^{®} MTRXPL par la société NORMANDY COATING, (Arques la bataille, France ; http://www.normandy-coating.com/fr/Les-produits/mates.html) on imprime en sérigraphie (maille 120) des lettres avec une composition d'encre formée d'un vernis commercialisé sous la référence LG 111104 par la société Tiflex (Poncin, France), et de 30 % d'une composition de pigments photoluminescents sous ultraviolets courts commercialisée sous la référence CD145 vert par la société Tiflex (Poncin, France).

On applique un tel film de marquage sur chacune des deux faces d'un empilement de feuilles de polycarbonate, et l'ensemble des feuilles formant cet empilement est laminé dans une presse de lamination à chaud et sous pression comme décrit dans l'exemple 1.

On peut ensuite séparer par pelage manuel les deux films de marquage. On obtient un support de données sous forme d'une carte dont l'épaisseur totale est égale à la somme des épaisseurs des feuilles de polycarbonate utilisées diminuée d'environ 10 %. Ce support de données présente sur ses faces externes des motifs photoluminescents sous ultraviolets courts correspondant à ceux imprimés sur le film de polyester en vitrophanie, qui ont été transférés sur la face externe du support de données au cours de la lamination à chaud et sous pression comme représenté figure 6. On constate qu'un simple grattage de surface ne permet pas de supprimer complètement ces motifs, l'encre ayant pénétré dans l'épaisseur du polycarbonate.

### EXEMPLE 5 :

Sur un film polyester mat de 75µm d'épaisseur traité pour favoriser l'adhérence commercialisé sous la référence STABIPHANE^{®} MTDE par la société NORMANDY COATING, (Arques la bataille, France; http://www.normandy-coating.com/fr/Les-produits/mates.html), on imprime en sérigraphie (maille 120) des lettres comme représenté figure 3 avec une composition de vernis à durcissement sous ultraviolets commercialisée sous la référence UV 391 série Uvibond^{®} par la société SERICOL (Trappes, France), mélangée à 5 % d'un promoteur d'adhérence commercialisé sous la référence UV290 par la société VFP (Saint Christol les Alès, France). On imprime ensuite sur ce vernis (après durcissement de ce dernier) en superposition aux lettres et au même motif (mêmes lettres) une composition d'encre métallisée réfléchissante commercialisée sous la référence 3Y2656 par la société Tiflex (Poncin, France).

On applique un tel film de marquage sur chacune des deux faces d'un empilement de feuilles de polycarbonate, et l'ensemble des feuilles formant cet empilement est laminé dans une presse de lamination à chaud et sous pression comme décrit dans l'exemple 1.

On peut ensuite séparer par pelage manuel les deux films de marquage. On obtient un support de données sous forme d'une carte dont l'épaisseur totale est égale à la somme des épaisseurs des feuilles de polycarbonate utilisées diminuée d'environ 10 %. Ce support de données présente sur ses faces externes des motifs en relief (en creux) correspondant aux lettres imprimées avec le vernis, et couverts par la couche métallisée réfléchissante qui a été transférée sur la face externe du support de données au cours de la lamination à chaud et sous pression. On constate une excellente séparation entre le vernis d'embossage et l'encre métallisée réfléchissante, cette dernière présentant une grande résistance à l'abrasion du fait qu'elle est située dans des creux.

L'invention peut faire l'objet de nombreuses variantes de réalisation par rapport aux modes de réalisation et variantes décrits ci-dessus et dans les exemples et représentés sur les figures. En particulier, il est possible d'utiliser un film de marquage pour réaliser une lamination de marquage d'une ou plusieurs couche(s) thermoplastique(s) préalablement à l'opération de lamination à chaud et sous pression de la totalité de l'empilement constituant le support de données multicouche. Chaque couche thermoplastique ainsi marquée préalablement est incorporée dans l'empilement. Il est aussi possible d'utiliser d'autres matériaux thermoplastiques que le polycarbonate, par exemple le PVC ou autres. Le procédé selon l'invention s'applique à tout support de données multicouche dont au moins une couche externe est en matériau thermoplastique et qui est fabriqué par lamination à chaud et sous pression, la nature des différentes autres couches constituant l'empilement utilisé pour cette lamination n'ayant pas d'importance, ce dernier pouvant incorporer d'autres couches en matériau non thermoplastique, par exemple des papiers synthétiques. Les différentes variantes peuvent être combinées, par exemple avec un film de matriçage portant des motifs en vitrophanie en relief d'embossage appliqué sur une face de l'empilement laminé, et un film de marquage portant des inscriptions transférables appliqué sur l'autre face de l'empilement, ou avec un même film de marquage portant à la fois motifs en vitrophanie en relief d'embossage et des inscriptions transférables.

## Revendications

1. Procédé de fabrication d'un support (19) de données multicouche pour un document officiel par lamination à chaud et sous pression d'une pluralité de couches (12) superposées comprenant au moins une couche (12a) externe en au moins un matériau thermoplastique, ledit support de données multicouche présentant des inscriptions, dites inscriptions (25, 35, 38) de sécurité,
**caractérisé en ce que** :
- on choisit au moins un film (20, 21, 36, 37) de marquage :
∘ adapté pour pouvoir subir une lamination à chaud et sous pression, dite lamination de marquage, avec une couche, dite couche (12a) à marquer, en matériau thermoplastique de ladite pluralité de couches superposées formant le support de données, ladite couche à marquer étant revêtue du film de marquage, lors de ladite lamination de marquage,
∘ comprenant une face, dite face (23) de contact, portant des inscriptions (22, 34) en vitrophanie correspondant auxdites inscriptions (25, 35, 38) de sécurité, et adaptées pour marquer ladite couche à marquer suite à une lamination de marquage du film de marquage et de ladite couche à marquer, ladite face de contact et lesdites inscriptions en vitrophanie étant au contact de ladite couche à marquer,
∘ adapté pour pouvoir être séparé de ladite couche à marquer après une lamination de marquage, les inscriptions de sécurité étant formées sur ladite couche à marquer,
∘ présentant, à titre d'inscriptions en vitrophanie, des motifs (22, 34) en relief en vitrophanie d'embossage correspondant à des inscriptions (25, 35) de sécurité formées de motifs en relief sous forme d'empreintes,
- on réalise une lamination de marquage d'au moins une couche à marquer revêtue d'un tel film (20, 21, 36, 37) de marquage, lesdites inscriptions en vitrophanie étant au contact de ladite couche à marquer,
- puis on sépare le film (20, 21, 36, 37) de marquage de ladite couche (12a) à marquer, cette dernière présentant lesdites inscriptions (25, 35, 38) de sécurité.

2. Procédé selon la revendication 1, **caractérisé en ce que** la couche (12a) à marquer est une couche extrême de ladite pluralité de couches (12) superposées, destinée à former une face (17, 18) extrême libre du support (19) de données multicouche, et **en ce que** ladite lamination de marquage est ladite lamination à chaud et sous pression de ladite pluralité de couches superposées, le film (20, 21) de marquage étant placé au contact de la couche à marquer pendant cette lamination à chaud et sous pression, ladite face extrême libre du support portant lesdites inscriptions de sécurité après ladite lamination à chaud et sous pression.

3. Procédé selon l'une des revendications 1 ou 2, **caractérisé en ce qu'**une lamination de marquage est réalisée avant ladite lamination à chaud et sous pression de ladite pluralité de couches (12) superposées, la couche (12a) à marquer étant marquée avec lesdites inscriptions (25, 35, 38) de sécurité et intégrée à ladite pluralité de couches (12) superposées avant de réaliser ladite lamination à chaud et sous pression de ladite pluralité de couches superposées.

4. Procédé selon l'une des revendications 1 à 3, **caractérisé en ce que**
- on choisit un film (20, 21) de marquage présentant une face (23), dite face de contact, portant lesdits motifs en relief en vitrophanie formés par impression d'un vernis sur la face de contact, ladite face (23) de contact et ledit vernis étant choisis pour que lesdits motifs en relief en vitrophanie restent solidaires du film de marquage après lamination de marquage et séparation du film de marquage et de ladite couche à marquer,
- les motifs en relief en vitrophanie sont choisis parmi des motifs en reliefs imprimés sur la face (23) de contact avec ledit vernis, et des motifs en relief embossés en surface d'une couche dudit vernis imprimée sur la face (23) de contact.

5. Procédé selon la revendication 4, **caractérisé en ce qu'**on réalise ladite impression de vernis avec une composition de vernis à séchage sous ultraviolets comprenant au moins un agent promoteur d'adhérence du vernis sur ladite face (23) de contact.

6. Procédé selon l'une des revendications 1 à 5, **caractérisé en ce que** les motifs (23, 24) en relief en vitrophanie sont choisis parmi des motifs en relief présentant au moins deux états de surface différents correspondant respectivement à au moins deux valeurs différentes de brillance desdites inscriptions de sécurité, et des motifs en vitrophanie en relief adaptés pour former au moins un motif holographique.

7. Procédé selon l'une des revendications 1 à 6, **caractérisé en ce qu'**on choisit un film de marquage présentant, à titre d'inscriptions (38) en vitrophanie, au moins une impression de vernis adaptée pour être transférée par ladite lamination de marquage sur ladite couche à marquer, lesdites inscriptions (38) en vitrophanie transférées constituant lesdites inscriptions (38) de sécurité.

8. Procédé selon la revendication 7, **caractérisé en ce qu'**au moins une impression de vernis est choisie parmi une impression d'un vernis métallisé réfléchissant et une impression d'un vernis photoluminescent sous éclairage par un rayonnement lumineux hors du domaine visible.

9. Procédé selon l'une des revendications 1 à 8, **caractérisé en ce que** chaque couche (12) de ladite pluralité de couches superposées est formée d'au moins un matériau thermoplastique choisi dans le groupe des polycarbonates, des PVC, des papiers synthétiques, leurs mélanges et leurs associations, et **en ce qu'**on choisit un film (20, 21, 36, 37) de marquage en polyester.

10. Support de données multicouche pour un document officiel, obtenu par un procédé selon l'une des revendications 1 à 9, présentant des inscriptions, dites inscriptions (25, 35, 38) de sécurité, formé d'une pluralité de couches superposées et laminées entre elles, comprenant au moins une couche en au moins un matériau thermoplastique, **caractérisé en ce qu'**il comprend des inscriptions de sécurité choisies parmi des motifs en relief présentant des brillances différentes ; des motifs holographiques ; des motifs métallisés réfléchissants ; et des motifs photoluminescents sous éclairage par un rayonnement lumineux hors du domaine visible et **en ce que** chaque couche (12) de ladite pluralité de couches superposées est formée d'au moins un matériau thermoplastique choisi dans le groupe des polycarbonates.

11. Support de données selon la revendication 10, **caractérisé en ce qu'**il présente des inscriptions de sécurité formées sur au moins l'une de ses faces (17, 18) externes libres.

12. Document officiel comprenant un support de données selon l'une des revendications 10 ou 11.

## Patentansprüche

1. Verfahren zur Herstellung eines mehrschichtigen Datenträgers (19) für ein offizielles Dokument durch Warm- und Drucklaminierung einer Vielzahl von übereinander angeordneten Schichten (12), die mindestens eine Außenschicht (12a) aus mindestens einem thermoplastischen Material enthält, wobei der mehrschichtige Datenträger Sicherheitsbeschriftungen genannte Beschriftungen (25, 35, 38) aufweist,
**dadurch gekennzeichnet, dass**:
- mindestens eine Markierungsfolie (20, 21, 36, 37) ausgewählt wird:
o die geeignet ist, einer Warm- und Drucklaminierung, Markierlaminierung genannt, mit einer zu markierende Schicht (12a) genannten Schicht aus thermoplastischem Material der den Datenträger bildenden Vielzahl von übereinander angeordneten Schichten unterzogen werden zu können, wobei die zu markierende Schicht bei der Markierlaminierung mit der Markierungsfolie bedeckt ist,
o die eine Kontaktseite (23) genannte Seite enthält, die Vitrauphanie-Beschriftungen (22, 34) trägt, die den Sicherheitsbeschriftungen (25, 35, 38) entsprechen und geeignet sind, die zu markierende Schicht nach einer Markierlaminierung der Markierungsfolie und der zu markierenden Schicht zu markieren, wobei die Kontaktseite und die Vitrauphanie-Beschriftungen mit der zu markierenden Schicht in Kontakt sind,
o die geeignet ist, nach einer Markierlaminierung von der zu markierenden Schicht getrennt zu werden, wobei die Sicherheitsbeschriftungen auf der zu markierenden Schicht gebildet werden,
o Präsentieren, mittels Vitrauphanie-Beschriftungen, von Vitrauphanie-Reliefmustern (22,34), die mit einer Stanz-Vitrauphanie hergestellt werden, die Sicherheitsbeschriftungen (25,35) entsprechen, die durch Reliefmuster in der Form von Drucken gebildet werden,
- eine Markierlaminierung mindestens einer mit einer solchen Markierungsfolie (20, 21, 36, 37) bedeckten zu markierenden Schicht durchgeführt wird, wobei die Vitrauphanie-Beschriftungen mit der zu markierenden Schicht in Kontakt sind,
- dann die Markierungsfolie (20, 21, 36, 37) von der zu markierenden Schicht (12a) getrennt wird, wobei letztere die Sicherheitsbeschriftungen (25, 35, 38) aufweist.

2. Verfahren nach Anspruch 1, **dadurch gekennzeichnet, dass** die zu markierende Schicht (12a) eine Endschicht der Vielzahl von übereinander angeordneten Schichten (12) ist, die dazu bestimmt ist, eine freie Endseite (17, 18) des mehrschichten Datenträgers (19) zu bilden, und dass die Markierlaminierung die Warm- und Drucklaminierung der Vielzahl von übereinander angeordneten Schichten ist, wobei die Markierungsfolie (20, 21) während dieser Warm- und Drucklaminierung in Kontakt mit der zu markierenden Schicht angeordnet ist, wobei die freie Endseite des Trägers nach der Warm- und Drucklaminierung die Sicherheitsbeschriftungen trägt.

3. Verfahren nach einem der Ansprüche 1 oder 2, **dadurch gekennzeichnet, dass** eine Markierlaminierung vor der Warm- und Drucklaminierung der Vielzahl von übereinander angeordneten Schichten (12) durchgeführt wird, wobei die zu markierende Schicht (12a) vor der Durchführung der Warm- und Drucklaminierung der Vielzahl von übereinander angeordneten Schichten mit den Sicherheitsbeschriftungen (25, 35, 38) markiert und in die Vielzahl von übereinander angeordneten Schichten (12) integriert wird.

4. Verfahren nach einem der Ansprüche 1 bis 3, **dadurch gekennzeichnet,**
**dass**:
- eine Markierungsfolie (20, 21) gewählt wird, die eine Kontaktseite genannte Seite (23) aufweist, die die Vitrauphanie-Reliefmuster trägt, die durch Druck eines Lacks auf die Kontaktseite gebildet werden, wobei die Kontaktseite (23) und der Lack so gewählt werden, dass die Vitrauphanie-Reliefmuster nach der Markierlaminierung und dem Trennen der Markierungsfolie und der zu markierenden Schicht fest mit der Markierungsfolie verbunden bleiben,
- die Vitrauphanie-Reliefmuster aus mit dem Lack auf die Kontaktseite (23) gedruckten Mustern und aus an der Oberfläche einer auf die Kontaktseite (23) gedruckten Schicht des Lacks geprägten Reliefmustern ausgewählt werden.

5. Verfahren nach Anspruch 4, **dadurch gekennzeichnet, dass** der Druck von Lack mit einer Lackzusammensetzung mit Trocknen unter Ultraviolettstrahlung durchgeführt wird, die mindestens einen Haftvermittler des Lacks auf der Kontaktseite (23) enthält.

6. Verfahren nach einem der Ansprüche 1 bis 5, **dadurch gekennzeichnet, dass** die Vitrauphanie-Reliefmuster (23, 24) aus Reliefmustern, die mindestens zwei unterschiedliche Oberflächenzustände aufweisen, die je mindestens zwei unterschiedlichen Helligkeitswerten der Sicherheitsbeschriftungen entsprechen, und Vitrauphanie-Reliefmustern ausgewählt werden, die geeignet sind, um mindestens ein holografisches Muster zu bilden.

7. Verfahren nach einem der Ansprüche 1 bis 6, **dadurch gekennzeichnet, dass** eine Markierungsfolie gewählt wird, die als Vitrauphanie-Beschriftungen (38) mindestens einen Lackdruck aufweisen, der geeignet ist, durch die Markierlaminierung auf die zu markierende Schicht übertragen zu werden, wobei die übertragenen Vitrauphanie-Beschriftungen (38) die Sicherheitsbeschriftungen (38) bilden.

8. Verfahren nach Anspruch 7, **dadurch gekennzeichnet, dass** mindestens ein Lackdruck aus einem Druck eines reflektierenden Metallic-Lacks und einem Druck eines unter Beleuchtung durch eine Lichtstrahlung außerhalb des sichtbaren Bereichs photolumineszenten Lacks ausgewählt wird.

9. Verfahren nach einem der Ansprüche 1 bis 8, **dadurch gekennzeichnet, dass** jede Schicht (12) der Vielzahl von übereinander angeordneten Schichten aus mindestens einem thermoplastischen Material gebildet wird, das aus der Gruppe der Polycarbonate, der PVC, der synthetischen Papiere, ihren Mischungen und ihren Verbindungen ausgewählt wird, und dass eine Markierungsfolie (20, 21, 36, 37) aus Polyester gewählt wird.

10. Mehrschichtiger Datenträger für ein offizielles Dokument, der durch ein Verfahren nach einem der Ansprüche 1 bis 9 erhalten wird, der Sicherheitsbeschriftungen (25, 35, 38) genannte Beschriftungen aufweist, gebildet von einer Vielzahl von übereinander angeordneten und miteinander laminierten Schicht, die mindestens eine Schicht aus mindestens einem thermoplastischen Material enthält, **dadurch gekennzeichnet, dass** er Sicherheitsbeschriftungen enthält, die aus Reliefmustern mit unterschiedlichen Helligkeiten; holografischen Mustern; reflektierenden Metallic-Mustern und unter Beleuchtung durch eine Lichtstrahlung außerhalb des sichtbaren Bereichs photolumineszenten Mustern ausgewählt werden, und dass jede Schicht (12) der Vielzahl von übereinander angeordneten Schichten aus mindestens einem thermoplastischen Material gebildet wird, das aus der Gruppe der Polycarbonate ausgewählt wird.

11. Datenträger nach Anspruch 10, **dadurch gekennzeichnet**, das er Sicherheitsbeschriftungen aufweist, die auf mindestens einer seiner freien Außenseiten (17, 18) ausgebildet sind.

12. Offizielles Dokument, das einen Datenträger nach einem der Ansprüche 10 oder 11 enthält.

## Claims

1. Process for manufacturing a multilayer data carrier (19) for an official document by hot lamination under pressure of a plurality of superposed layers (12) comprising at least one external layer (12a) made of at least one thermoplastic, said multilayer data carrier presenting inscriptions, called security inscriptions (25, 35, 38), **characterized in that**:
- at least one marking film (20, 21, 36, 37) is chosen that:
o is designed to be able to undergo a hot lamination under pressure, called the marking lamination, with a layer, called the layer (12a) to be marked, made of thermoplastic of said plurality of superposed layers forming the data carrier, said layer to be marked being coated with the marking film, during said marking lamination,
o comprises a face, called the contact face (23), bearing decal inscriptions (22, 34) corresponding to said security inscriptions (25, 35, 38), and that are designed to mark said layer to be marked following a marking lamination of the marking film and of said layer to be marked, said contact face and said decal inscriptions making contact with said layer to be marked,
o is designed to be able to be separated from said layer to be marked after a marking lamination, the security inscriptions being formed on said layer to be marked,
o presenting, by way of decal inscriptions, decal patterns (22,34) in relief made with a stamping decal corresponding to security inscriptions (25,35) formed by patterns in relief in the form of prints,
- a marking lamination is carried out on at least one layer to be marked coated with such a marking film (20, 21, 36, 37), said decal inscriptions making contact with said layer to be marked,
- then the marking film (20, 21, 36, 37) is separated from said layer (12a) to be marked, the latter presenting said security inscriptions (25, 35, 38).

2. Process according to Claim 1, **characterized in that** the layer (12a) to be marked is an end layer of said plurality of superposed layers (12), said end layer being intended to form a free end face (17, 18) of the multilayer data carrier (19), and **in that** said marking lamination is said hot lamination under pressure of said plurality of superposed layers, the marking film (20, 21) being placed in contact with the layer to be marked during this hot lamination under pressure, said free end face of the carrier bearing said security inscriptions after said hot lamination under pressure.

3. Process according to either of Claims 1 and 2, **characterized in that** a marking lamination is carried out before said hot lamination under pressure of said plurality of superposed layers (12), the layer (12a) to be marked being marked with said security inscriptions (25, 35, 38) and integrated into said plurality of superposed layers (12) before said hot lamination under pressure of said plurality of superposed layers is carried out.

4. Process according to one of Claims 1 to 3, **characterized in that**:
- a marking film (20, 21) is chosen having a face (23), called the contact face, bearing said decal patterns in relief, said patterns being formed by printing a varnish onto the contact face, said contact face (23) and said varnish being chosen so that said decal patterns in relief remain securely fastened to the marking film after the marking lamination and after separation of the marking film and said layer to be marked,
- the decal patterns in relief are chosen from patterns in relief that are printed onto the contact face (23) with said varnish, and patterns in relief that are embossed into the surface of a layer of said varnish that is printed onto the contact face (23).

5. Process according to Claim 4, **characterized in that** said printing of varnish is carried out with a UV varnish composition comprising at least one agent that promotes adhesion of the varnish to said contact face (23).

6. Process according to one of Claims 1 to 5, **characterized in that** the decal patterns (23, 24) in relief are chosen from patterns in relief having at least two different surface finishes corresponding to at least two different gloss values of said security inscriptions, respectively, and decal patterns in relief that are designed to form at least one holographic pattern.

7. Process according to one of Claims 1 to 6, **characterized in that** a marking film is chosen having, by way of decal inscriptions (38), at least one varnish print that is designed to be transferred, by said marking lamination, to said layer to be marked, said transferred decal inscriptions (38) forming said security inscriptions (38).

8. Process according to Claim 7, **characterized in that** at least one varnish print is chosen from a print of a reflective metallized varnish and a print of a varnish that is photoluminescent under illumination with light radiation not in the visible domain.

9. Process according to one of Claims 1 to 8, **characterized in that** each layer (12) of said plurality of superposed layers is formed from at least one thermoplastic chosen from the group made up of the polycarbonates, of the PVCs, of synthetic papers, of mixtures thereof and of associations thereof, and **in that** a marking film (20, 21, 36, 37) made of polyester is chosen.

10. Multilayer data carrier for an official document, obtained with a process according to one of Claims 1 to 9, presenting inscriptions, called security inscriptions (25, 35, 38), said carrier being formed from a plurality of layers that are superposed and laminated together, and that comprise at least one layer made of at least one thermoplastic, **characterized in that** it comprises security inscriptions chosen from patterns in relief having different glosses; holographic patterns; reflective metallized patterns; and patterns that are photoluminescent under illumination with light radiation not in the visible domain, and **in that** each layer (12) of said plurality of superposed layers is formed from at least one thermoplastic chosen from the group made up of the polycarbonates.

11. Data carrier according to Claim 10, **characterized in that** it has security inscriptions formed on at least one of its free external faces (17, 18).

12. Official document comprising a data carrier according to either of Claims 10 or 11.
